# EUROPEAN PATENT SPECIFICATION

(11) **EP 2 378 806 B1**
(45) Date of publication and mention of the grant of the patent: **24.10.2018**
(21) Application number: 09838171.8
(22) Date of filing: 31.12.2009
(51) Int. Cl.: H04W 72/12, H04W 28/06

(54) **METHOD AND DEVICE FOR TRIGGERING AND REPORTING SCHEDULING REQUEST IN WIRELESS NETWORKS**
VERFAHREN UND VORRICHTUNG ZUR AUSLÖSUNG UND MELDUNG VON ZEITPLANUNGSANFRAGEN IN DRAHTLOSEN NETZWERKEN
PROCÉDÉ ET DISPOSITIF DE DÉCLENCHEMENT ET DE RAPPORT DE REQUÊTE DE PLANIFICATION DANS DES RÉSEAUX SANS FIL

(30) Priority: 13.01.2009 CN 200910076345
(43) Date of publication of application: 19.10.2011
(73) Proprietor: ZTE Corporation, Shenzhen, Guangdong 518057 (CN)
(72) Inventor: DAI, Qian, Shenzhen Guangdong 518057 (CN); CHEN, Si, Shenzhen Guangdong 518057 (CN); ZHANG, Jian, Shenzhen Guangdong 518057 (CN); ZHANG, Yincheng, Shenzhen Guangdong 518057 (CN)
(74) Representative: Bjerkéns Patentbyrå KB (Stockholm)
(86) International application number: PCT/CN2009/076378
(87) International publication number: WO 2010/081384

(56) References cited:
- WO-A1-2007/087842
- CN-A- 1 596 003
- CN-A- 101 128 024
- CN-A- 101 175 301
- LG ELECTRONICS INC: "Robust BSR", 3GPP DRAFT; R2-085481 BSR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080923, 23 September 2008 (2008-09-23), XP050320306, [retrieved on 2008-09-23]
- NOKIA SIEMENS NETWORKS ET AL: "Usage of RRC Parameters", 3GPP DRAFT; R2-090814 MAC RRC PARAMETERS CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090126, 12 January 2009 (2009-01-12), XP050322624, [retrieved on 2009-01-12]
- LG ELECTRONICS INC: "Issues with Scheduling Request Procedure", 3GPP DRAFT; R2-081597 ISSUES WITH SCHEDULING REQUEST PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen; 20080331 - 20080404, 25 March 2008 (2008-03-25), XP050603676, [retrieved on 2008-03-25]
- ERICSSON: "SR triggering in relation to uplink grants", 3GPP DRAFT; R2-081468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139212, [retrieved on 2008-03-25]

## Description

### TECHNICAL FIELD

The present invention relates to an uplink resource allocation technique in the field of wireless communications, particularly to a method and device for triggering or reporting a scheduling request (SR) in wireless networks.

### BACKGROUND

In the evolved universal terrestrial radio access network (E-UTRAN) of the third-generation mobile communication long term evolution (LTE) system, uplink data is transmitted via an uplink shared channel (UL-SCH), and uplink resource is allocated to user equipment (UE) by a base station. Dedicated uplink control signaling is formulated for the user's uplink transmission demand in the LTE system. In the uplink control signaling, the control signaling in relation to uplink radio resource management contains an SR and a buffer status report (BSR) of UE.

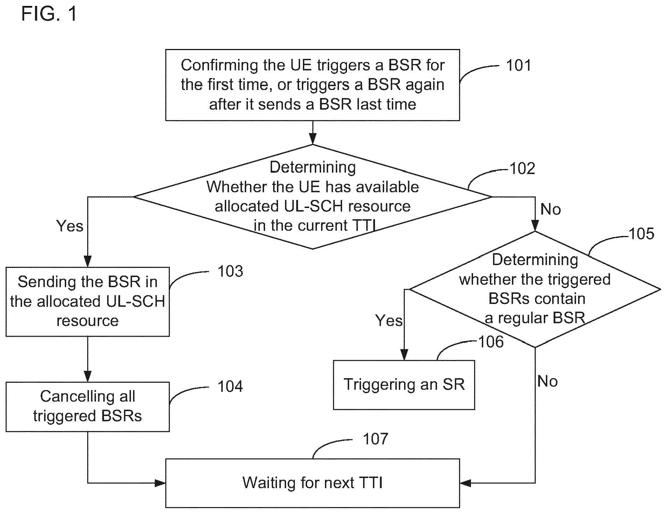

In the LTE media access control (MAC) layer protocol, the condition of triggering SR is specified as follows: if a UE triggers a BSR for the first time, or triggers a BSR again after it sends a BSR last time, then if the UE does not have allocated uplink resource which can be used for the new transmission in the current transmission time interval (TTI) and the BSR is a regular BSR, an SR will be triggered. An SR triggering process in the prior art is shown in FIG. 1, and the specific process is as follows.

Step 101, confirming the UE triggers a BSR for the first time, or triggers a BSR again after it sends a BSR last time.

Steps 102-103, determining whether the UE has available allocated UL-SCH resource in the current TTI. If yes, Step 103 will be executed and the BSR will be sent in the allocated UL-SCH resource; if no, Step 105 will be executed.

Step 104, cancelling all other triggered BSRs. Then Step 107 will be executed and wait for next TTI.

Steps 105-106, determining whether the triggered BSRs contain a regular BSR. If yes, Step 106 will be executed and an SR will be triggered; if no, Step 107 will be executed and next TTI will be waited for.

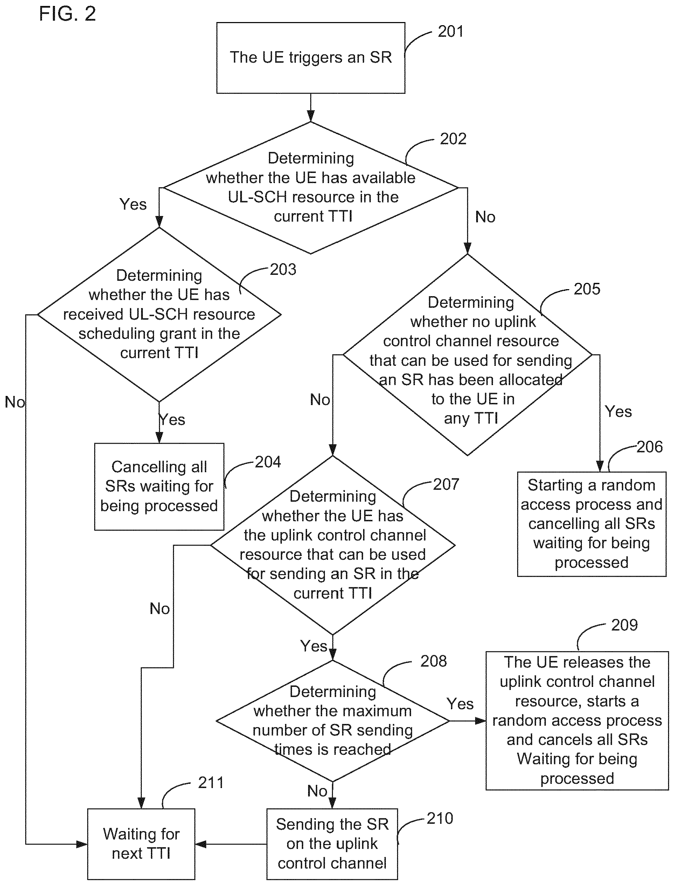

An uplink control channel is needed for SR reporting, the uplink control channel resource is allocated to the UE by the base station in advance. FIG. 2 is a schematic flowchart illustrating SR reporting in the prior art. As shown in FIG. 2, the specific processing process includes the following steps.

Step 201, the UE triggers an SR.

Step 202, determining whether the UE has available allocated UL-SCH resource in the current TTI. If yes, Step 203 will be executed; if no, Step 205 will be executed.

Steps 203-204, determining whether the UE has received UL-SCH resource scheduling grant in the current TTI. If yes, all SRs waiting for being processed will be cancelled; if no, Step 211 will be executed, next TTI will be waited for and continued determining will be performed.

Steps 205-206, determining whether no uplink control channel resource that can be used for sending an SR has been allocated to the UE in any TTI. If yes, a random access process will be started and all SRs waiting for being processed will be cancelled; if no, Step 207 will be executed.

Step 207, determining whether the UE has the uplink control channel resource that can be used for sending an SR in the current TTI. If yes, Step 208 will be executed; if no, Step 211 will be executed, next TTI will be waited for and continued determining will be performed.

Step 208, determining whether the maximum number of SR sending times is reached. If the UE does not receive the UL-SCH resource scheduling grant from the base station in a fixed period, i.e. when there is no available UL-SCH resource, the UE will send an SR many a time until the maximum number of SR sending times is reached. If the maximum number of sending times is reached, Step 209 will be executed; if the maximum number of sending times is not reached, Step 210 will be executed.

Step 209, the UE releases the uplink control channel resource, starts a random access process and cancels all SRs waiting for being processed.

Step 210, sending the SR on the uplink control channel, then Step 211 will be executed and next TTI will be waited for.

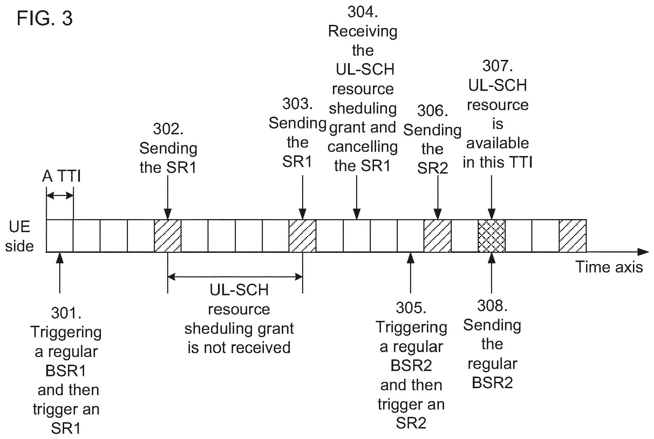

As shown in FIG. 1 and FIG. 2, the SR triggering and sending mechanism prescribed in the current LTE MAC layer protocol is imperfect. There is still a time interval from the time when the UE receives resource scheduling grant fed back by the base station to the time when the UE has available UL-SCH resource. When a regular BSR is triggered in this time interval, an SR will be triggered subsequently. Moreover, if the UE has an available uplink control channel in this time interval, the SR will be sent. However, as the UE has received the resource scheduling grant fed back by the base station, therefore the sending of the SR is totally unnecessary. FIG. 3 is a time sequence diagram illustrating SR triggering and reporting according to an embodiment of the prior art. As shown in the figure, a box in the figure stands for a TTI of the time sequence, and uplink control channel resource, which is used for sending an SR to the base station by the UE, is allocated to the UE by the base station every 5 TTIs, i.e. the sending period of an SR is five TTIs.

Event 301, a UE triggers a regular BSR1, and then triggers an SR1.

Event 302, when an SR sending period arrives, the UE sends the SR1 to the base station, to request UL-SCH resource scheduling grant.

Event 303, when another SR sending period arrives, as the UE does not receive the UL-SCH resource scheduling grant, the SR1 is sent again.

Event 304, the UE has received the UL-SCH resource scheduling grant in this TTI, so it cancels the SR1 waiting for being processed, i.e. the SR1 is not sent again.

Event 305, the UE triggers a regular BSR2. As the UE does not have available UL-SCH resource in this TTI, it triggers an SR2.

Event 306, an SR sending period arrives, so the UE sends the SR2 in this TTI through an uplink control channel.

Event 307, the UE has available UL-SCH resource in this TTI.

Event 308, the UE sends the BSR2.

From the foregoing process, it can be seen that the UE has obtained the UL-SCH resource scheduling grant fed back by the base station in the TTI in which Event 304 occurs, so the SR2 sent in the TTI in which Event 306 occurs is totally unnecessary, thereby resulting in increase of uplink control signaling overhead. Further, as the base station may respond to this SR2 and reallocate other UL-SCH resource to the UE, therefore system bandwidth will be wasted and system frequency spectrum efficiency will be affected.

We also refer to the following documents disclosing related art.
D1: LG ELECTRONICS INC: "Robust BSR", 3GPP DRAFT; R2-085481 BSR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080923, 23 September 2008, XP050320306

This document, D1, R2-085481, discloses: when there is no more HARQ process with valid UL grant, and if there if non-empty buffer, a BSR is triggered, and if a BSR is triggered when there is a HARQ process with valid UL grant, scheduling request procedure is not triggered., and:
D2: NOKIA SIEMENS NETWORKS ET AL: "Usage of RRC Parameters", 3GPP DRAFT; R2-090814 MAC RRC PARAMETERS CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090126, 12 January 2009, XP050322624.

This document, D2, R2-090814, discloses a method for reporting a scheduling request.

### SUMMARY

In view of the foregoing reason, the present invention aims to provide a method and device for triggering or reporting a scheduling request (SR) in wireless networks, to reduce system overhead and improve system frequency spectrum efficiency.

To achieve the foregoing objective, the technical solution of the present invention is realized in the following way.

The present invention provides a method for reporting a scheduling request, SR, a user equipment, UE, triggering (601) an SR, the method comprising:
the UE determining (602, 603) whether uplink shared channel, UL-SCH, resource allocated for a new transmission is available in a current transmission time interval, TTI; if yes (603), all SRs waiting for being processed being cancelled;
if no (604), the SR being sent on an uplink control channel when it is determined that uplink control channel resource which can be used for sending an SR has been allocated to the UE, and that there is the uplink control channel resource which can be used for sending an SR in the current TTI and a maximum number of SR sending times is not reached.

The present invention also provides a device for reporting a scheduling request, SR, comprising:
a determining module (91), which is used for determining whether a user equipment, UE, has available uplink shared channel, UL-SCH, resource allocated for a new transmission in a current transmission time interval, TTI, and obtaining a determining result;
a channel determining module (93), which is used for determining that uplink control channel resource that can be used for sending an SR has been allocated to the UE and there is the uplink control channel resource that can be used for sending an SR in the current TTI when the determining result of the determining module is no;
an SR sending module (94), which is used for determining that a maximum number of SR sending times is not reached and sending an SR on an uplink control channel when there is the uplink control channel resource that can be used for sending an SR in the current TTI, and
an SR cancelling module (92), which is used for cancelling all SRs waiting for being processed when the determining result of the determining module is yes.

Compared to the prior art, the present invention makes improvement on the aspects of SR triggering process and SR reporting process respectively, adds determining of UL-SCH resource scheduling grant and subsequent UL-SCH resource and so on; with the present invention, the current status of the UE can be accurately determined, and only a necessary SR is triggered and reported. Therefore, not only system overhead can be saved, but also it can be avoided that the base station, in order to respond to the unnecessary SR sent by the UE, allocates redundant UL-SCH resource to the UE, moreover, the system bandwidth is also saved and the system frequency spectrum efficiency is improved.

### BRIEF DESCRIPTION OF THE DRAWINGS

FIG. 1 is a schematic flowchart illustrating SR triggering in the prior art;
FIG. 2 is a schematic flowchart illustrating SR reporting in the prior art;
FIG. 3 is a time sequence diagram illustrating SR triggering and reporting according to an embodiment of the prior art;
FIG. 4 is a schematic flowchart illustrating SR triggering according to Method Embodiment 1 of the present invention;
FIG. 5 is a schematic flowchart illustrating SR triggering according to Method Embodiment 2 of the present invention;
FIG. 6 is a schematic flowchart illustrating SR reporting according to a method of the present invention;
FIG. 7 is a structural relation schematic diagram illustrating an SR triggering device according to Device Embodiment 1 of the present invention;
FIG. 8 is a structural relation schematic diagram illustrating an SR triggering device according to Device Embodiment 2 of the present invention;
FIG. 9 is a structural relation schematic diagram illustrating an SR triggering and reporting device according to Device Embodiment 1 of the present invention;
FIG. 10 is a structural relation schematic diagram illustrating an SR triggering and reporting device according to Device Embodiment 2 of the present invention.

### DETAILED DESCRIPTION

The technical solution of the present invention is described in detail below in combination with the accompanying drawings and embodiments.

In the LTE system, when a UE has new data which needs to be transmitted on a UL-SCH, it will inform the base station by sending an SR, to request the base station to allocate available UL-SCH resource for a new transmission; after the base station confirms that the UL-SCH resource for the new transmission can be allocated to the UE, it will send preliminary UL-SCH resource scheduling grant to the UE; then the UE will send a BSR to the base station according to the UL-SCH resource for the new transmission as instructed in the UL-SCH resource scheduling grant, to inform the base station of the volumes of new data waiting for being transmitted and request the base station to allocate an appropriate size of UL-SCH resource for the new transmission.

Below the SR triggering process in the present invention is described by referring to specific embodiments.

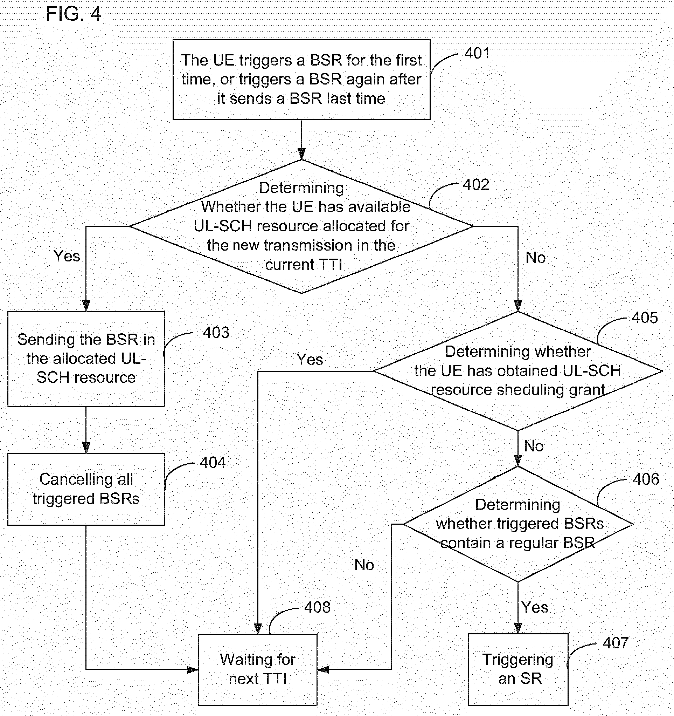

FIG. 4 is a schematic flowchart illustrating SR triggering according to Method Embodiment 1 of the present invention. As shown in FIG. 4, the specific process includes the following steps.

Step 401, the UE triggers a BSR for the first time, or triggers a BSR again after it sends a BSR last time.

When the UE has new data which needs to be transmitted on a UL-SCH, it needs to trigger an SR firstly. In the LTE system, a precondition specified for SR triggering is that: it is required that the UE triggers a BSR for the first time or triggers a BSR again after it sends a BSR last time, and when the UE has no available allocated UL-SCH resource in the current TTI and the triggered BSRs contain a regular BSR, an SR will be triggered.

In the provision of LTE MAC layer protocol, according to different triggering conditions, BSRs may be divided into three categories: regular BSR, periodic BSR and padding BSR.

Wherein many types of events can trigger regular BSRs, including: available data is waiting for being transmitted, while the buffer of the UE is empty; available data with higher priority is waiting for being transmitted , while available data waiting for being transmitted in the buffer of the UE is of lower priority; change occurs on the service cell to which the UE belongs; a timer for BSR resending times out, but in the UE, there is available data waiting for being transmitted.

The events that trigger periodic BSRs include: a periodic BSR timer times out.

The events that trigger padding BSRs include: the UE has obtained allocated uplink resource, and the number of padding bits is equal to or greater than the size of the control unit of the BSR MAC layer.

It should be noted that in the present invention, the condition for triggering an SR is not limited to the triggering of a regular BSR and is also applicable to other types of BSRs, of course the condition is also applicable to other events that can trigger SRs. In the present invention, the triggering of a regular BSR is taken as an example to describe the specific process of SR triggering.

Step 402, determining whether the UE has available UL-SCH resource allocated for the new transmission in the current TTI. If yes, Step 403 will be executed; if no, Step 405 will be executed.

It is determined whether the base station has allocated the UL-SCH resource for the new transmission to the UE in the current TTI.

When UL-SCH resource scheduling grant allocated by the base station is received, there will be related record information in the UE; after the UE receives the grant, it needs a period of decoding time to translate the content of the grant. From the content of the grant, it may be known in which TTI the UE may obtain available UL-SCH resource for the new transmission. Typically, the decoding time is longer than one TTI.

Step 403, sending the BSR in the allocated UL-SCH resource.

When the UE receives the UL-SCH resource for the new transmission which is allocated by the base station, the BSR triggered by the UE will be sent in the TTI through the UL-SCH resource allocated for the new transmission, to inform the base station of the current volumes of the data waiting for being transmitted in the UE and request the base station to allocate an appropriate size of UL-SCH resource to the UE.

Before a BSR is sent, the UE may have triggered a plurality of BSRs. Which triggered BSR is sent may be selected through a set algorithm. Preferably, the BSR triggered at recent time may be sent, because this BSR can correctly reflect the current volumes of data waiting for being transmitted in the UE.

Step 404, cancelling all triggered BSRs, then Step 408 will be executed, and next TTI will be waited for to carry out subsequent operations.

After the UE sends the BSR to the base station, all BSRs triggered before will be cancelled, to avoid that the UE sends one of these BSRs to the base station again in subsequent processing, which leads to the increase of system overhead; and it is also avoided that the base station responds to this BSR and allocates unnecessary UL-SCL resource to the UE.

Step 405, determining whether the UE has obtained UL-SCH resource scheduling grant. If yes, Step 408 will be executed, next TTI will be waited for and when the UE receives the allocated UL-SCH resource, it will send the BSR; if no, Step 406 will be executed.

If the UE does not receive the UL-SCH resource allocated by the base station in the current TTI, it will be determined whether the UE has obtained the UL-SCH resource scheduling grant sent by the base station up till this TTI.

Compared to the process in the prior art, the present invention adds the determining step 405. From the determining step, it may be known whether the UE has obtained UL-SCH resource scheduling grant by now. If yes, it is indicated that the base station has responded to the SR reported by the UE before, and the UE will definitely obtain UL-SCH resource in the n^{th} TTI numbered from the TTI in which the UE obtains scheduling grant. Therefore, it is not necessary for the UE to trigger and report an SR in the period from the time when the UE acquires UL-SCH resource scheduling grant to the time when the UE acquires UL-SCH resource, thus system overhead is saved.

Step 406, determining whether triggered BSRs contain a regular BSR. If yes, Step 407 will be executed; if no, Step 408 will be executed, next TTI will be waited for and continued determining will be performed on whether the UE has available allocated UL-SCH resource.

Whether the BSR is a regular BSR, or a periodic BSR or other type of BSR may be determined according to the type of the event that triggers the BSR. For example, an identity may be added to the BSR according to the triggering event, and the type of BSR can be identified through the identity. Of course, the method for determining the type of a BSR is not limited to the method described herein.

Step 407, triggering an SR.

The UE triggers an SR according to the triggered regular BSR.

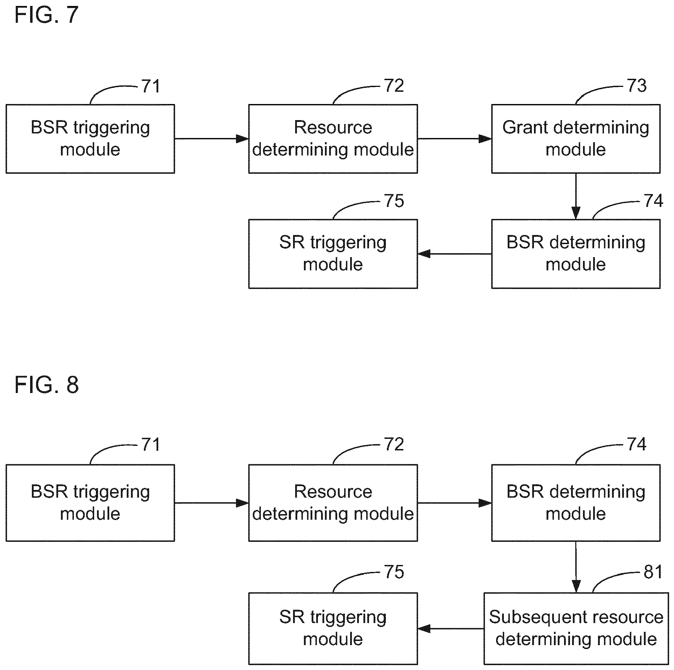

In order to realize the SR triggering method shown in FIG. 4, the present invention provides a device. FIG. 7 is a structural relation schematic diagram illustrating an SR triggering device according to Device Embodiment 1 of the present invention. The device comprises:
a BSR triggering module 71, which is used for triggering a BSR, which specifically means that: the UE triggers a BSR for the first time, or triggers a BSR again after it sends a BSR last time;
a resource determining module 72, which is used for determining that no allocated UL-SCH resource is available in the current TTI;
a grant determining module 73, which is used for determining that no UL-SCH resource scheduling grant is obtained when it is determined that no allocated UL-SCH resource is available in the current TTI;
a BSR determining module 74, which is used for determining that the triggered BSRs contain a set type of BSR when it is determined that no UL-SCH resource scheduling grant is obtained;
an SR triggering module 75, which is used for triggering an SR when it is determined that the triggered BSRs contain a regular BSR.

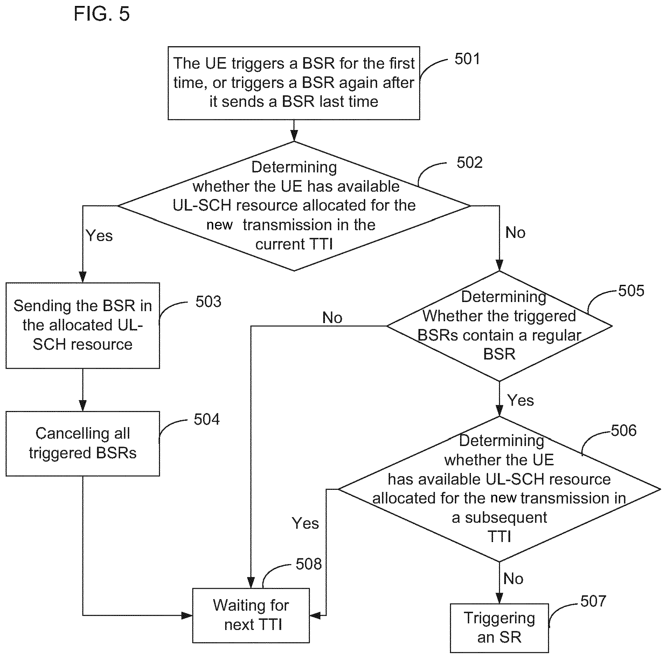

FIG. 5 is a schematic flowchart illustrating an SR triggering according to Method Embodiment 2 of the present invention. As shown in the figure, the specific processing process includes the following steps.

Steps 501- 504 are the same as Steps 401∼404 in FIG. 4, which are not described again here.

Step 505, determining whether the triggered BSRs contain a regular BSR. If yes, Step 506 will be executed; if no, Step 508 will be executed, next TTI will be waited for and continued determining will be performed on whether the UE has available allocated UL-SCH resource.

If the UE does not receive the UL-SCH resource allocated by the base station in the current TTI, it will determine whether the triggered BSRs contain a regular BSR. The determining method in this step is the same as that in Step 406 in FIG. 4, which is not described again here.

Step 506, determining whether the UE has available UL-SCH resource allocated for the new transmission in a subsequent TTI. If no, Step 507 will be executed; if yes, Step 508 will be executed.

The base station responds to the SR sent by the UE and sends UL-SCH resource scheduling grant to the UE. When the UE receives the UL-SCH resource scheduling grant, there will be related record information; after the UE receives the grant, it needs a period of decoding time to translate the content of the grant. From the content of the grant, it may be known in which TTI the UE may obtain available UL-SCH resource for the new transmission. Typically, the decoding time is longer than one TTI.

In the current TTI, the UE can determine whether it has received the UL-SCH resource scheduling grant sent by the base station up till the current TTI. According to this grant, it may be determined whether the UE can obtain the UL-SCH resource for the new transmission which is allocated by the base station in the subsequent TTI. If it is determined that the UE has available UL-SCH resource allocated for the new transmission in the subsequent TTI, then from the current TTI on, there will be no need to trigger and report the SR again, thereby system overhead is saved.

If yes, it is indicated that the base station has responded to the SR sent by the UE before, Step 508 will be executed, next TTI will be waited for, and the BSR will be sent in the TTI in which the UL-SCH resource allocated for the new transmission arrives; if no, it is indicated that the base station has not responded to the SR sent by the UE before or the UE has not sent any SR to the base station, Step 507 will be executed and the UE will trigger an SR according to the triggered regular BSR.

In order to realize the SR triggering method shown in FIG. 5, the present invention provides a device. FIG. 8 is a structural relation schematic diagram illustrating an SR triggering device according to Device Embodiment 2 of the present invention. As shown in FIG. 8, the device comprises:
a BSR triggering module 71, which is used for triggering a BSR, which specifically means that: the UE triggers a BSR for the first time, or triggers a BSR again after it sends a BSR last time;
a resource determining module 72, which is used for determining that no allocated UL-SCH resource is available in the current TTI;
a BSR determining module 74, which is used for determining that the triggered BSRs contain a set type of BSR when no allocated UL-SCH resource is available in the current TTI;
a subsequent resource determining module 81, which is used for determining that no allocated UL-SCH resource is available in a subsequent TTI when it is determined that the triggered BSRs contain a set type of BSR;
an SR triggering module 75, which is used for triggering an SR when no allocated UL-SCH resource is available in the subsequent TTI.

Below the SR reporting process in the present invention is described by referring to specific embodiments.

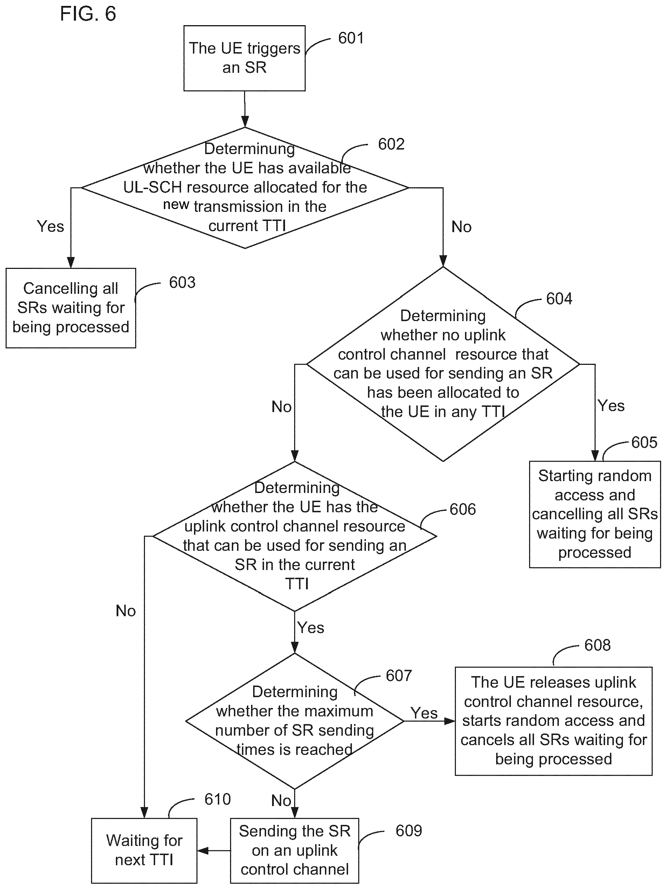

FIG. 6 is a schematic flowchart illustrating an SR reporting according to a method of the present invention. As shown in the figure, the processing process includes the following steps.

Step 601, the UE triggers an SR.

Steps 602-603, determining whether the UE has available UL-SCH resource allocated for the new transmission in the current TTI. If yes, Step 603 will be executed and all SRs waiting for being processed will be cancelled; if no, Step 604 will be executed.

It is determined whether the UE has available UL-SCH resource allocated for the new transmission in the current TTI after the UE triggers the SR. If yes, it is indicated that the base station has responded to the SR sent by the UE before, and the base station has allocated the UL-SCH resource for the new transmission to the UE, then Step 603 will be executed and all SRs waiting for being processed will be cancelled; if no, Step 604 will be executed.

Steps 604-605, determining whether no uplink control channel resource that can be used for sending an SR has been allocated to the UE in any TTI. If yes, Step 605 will be executed, a random access process will be started and all SRs waiting for being processed will be cancelled; if no, Step 606 will be executed.

The UE reports an SR to the base station through uplink control channels, and uplink control channel resource is allocated to the UE by the base station. When uplink control channel resource is allocated to the UE, there will be related record information; or a period for allocating uplink control channel resource to the UE, i.e. SR sending period, may be set according to requirement. One period shall contain one TTI at least. Of course, there may be other methods. According to the information, it may be determined whether uplink control channel resource has been allocated to the UE up till the current TTI. If no, it is indicated that the connection between the UE and the base station may be abnormal, and the UE will start a random access process to establish connection to the base station again, and cancel all SRs waiting for being processed.

Step 606, determining whether the UE has the uplink control channel resource that can be used for sending an SR in the current TTI. If no, Step 610 will be executed, next TTI will be waited for and continued determining will be performed on whether the UE has the uplink control channel resource that can be used for sending an SR in the current TTI; if yes, Step 607 will be executed.

If the uplink control channel resource that can be used for sending an SR has been allocated to the UE, it is indicated that the connection between the UE and the base station is normal, and then it will be determined whether the UE has the uplink control channel resource that can be used for sending an SR in the current TTI.

Steps 607-608, determining whether the maximum number of SR sending times is reached. If yes, Step 608 will be executed and the UE will release uplink control channel resource, start a random access process and cancel all SRs waiting for being processed; if no, Step 609 will be executed.

According to requirement, it may be set that SR is sent every n TTIs and the maximum number of SR sending times is m, wherein n and m are natural numbers. When the UE has the uplink control channel resource that can be used for sending an SR in the current TTI, the number of SR sending times will be calculated in the period from the time when the UE sent an SR for the first time to the current TTI. If the number of sending times reaches the maximum number of SR sending times, it is indicated that the connection between the UE and the base station is abnormal and the UE will release the uplink control channel resource, start a random access process and cancel all SRs waiting for being processed; if the number of sending times does not reach the maximum number of SR sending times, Step 609 will be executed.

Steps 609-610, sending the SR on an uplink control channel, then waiting for next TTI, and circularly executing this process.

The UE sends the SR through an uplink control channel in the current TTI, i.e. reporting the SR to the base station, and then begins to circularly execute this process in next TTI.

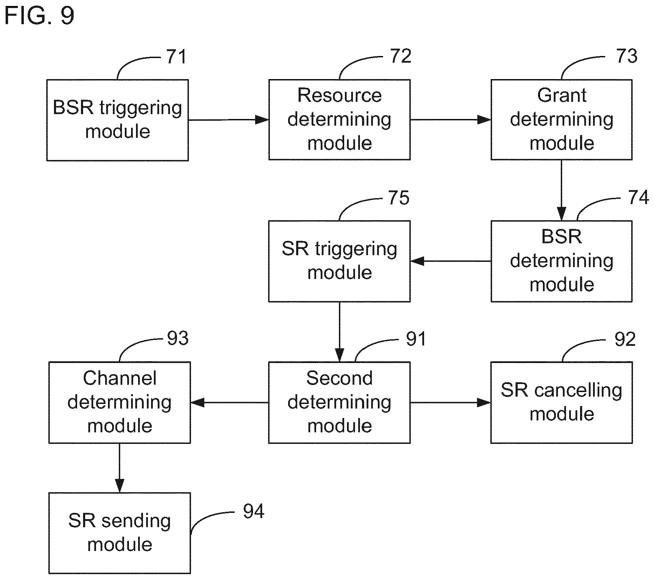

A process of a method for triggering and reporting an SR can be obtained by combining the process of the SR reporting method shown in FIG. 6 with the process of the SR triggering method shown in FIG. 4 or that in FIG. 5 respectively. In order to realize this process of the method, the present invention provides a device for triggering and reporting an SR. FIG. 9 is a structural relation schematic diagram illustrating an SR triggering and reporting device according to Device Embodiment 1 of=the present invention. As shown in FIG. 9, the device comprises:
a BSR triggering module 71, which is used for triggering a BSR, which specifically means that: the UE triggers a BSR for the first time, or triggers a BSR again after it sends a BSR last time;
a resource determining module 72, which is used for determining that no allocated UL-SCH resource is available in the current TTI;
a grant determining module 73, which is used for determining that no UL-SCH resource scheduling grant is obtained when it is determined that no allocated UL-SCH resource is available in the current TTI;
a BSR determining module 74, which is used for determining that the triggered BSRs contain a set type of BSR when it is determined that no UL-SCH resource scheduling grant is obtained;
an SR triggering module 75, which is used for triggering an SR when it is determined that the triggered BSRs contain a set type of BSR;
a determining module 91, which is used for determining whether the UE has available UL-SCH resource allocated for the new transmission in the current TTI after the SR is triggered, and obtaining the determining result;
an SR cancelling module 92, which is used for cancelling all SRs waiting for being processed when the determining result of the determining module is yes;
a channel determining module 93, which is used for determining that uplink control channel resource that can be used for sending an SR has been allocated to the UE and there is the uplink control channel resource which can be used for sending an SR in the current TTI when the determining result of the determining module is no;
an SR sending module 94, which is used for determining that a maximum number of SR sending times is not reached and sending the SR on an uplink control channel when there is the uplink control channel resource that can be used for sending an SR in the current TTI.

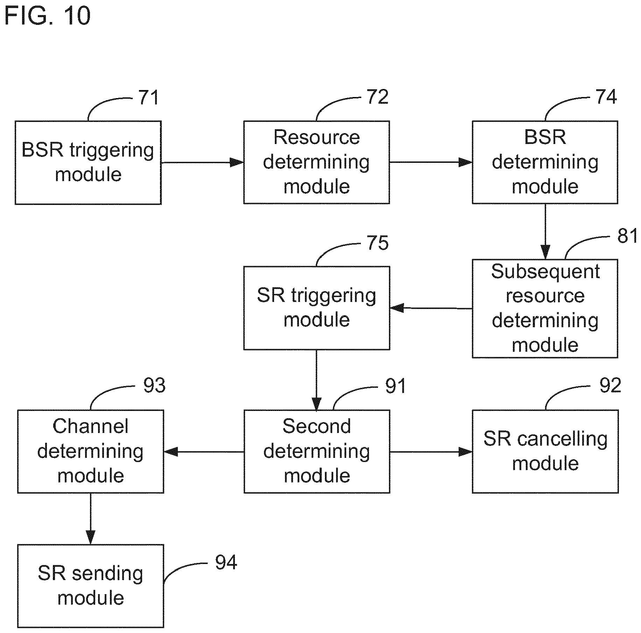

FIG. 10 is a structural relation schematic diagram illustrating an SR triggering and reporting device according to Device Embodiment 2 of the present invention. As shown in the figure, the device comprises:
a BSR triggering module 71, which is used for triggering a BSR, which specifically means that: the UE triggers a BSR for the first time, or triggers a BSR again after it sends a BSR last time;
a resource determining module 72, which is used for determining that no allocated UL-SCH resource is available in the current TTI;
a BSR determining module 74, which is used for determining that the triggered BSRs contain a set type of BSR when no allocated UL-SCH resource is available in the current TTI;
a subsequent resource determining module 81, which is used for determining that no allocated UL-SCH resource is available in the subsequent TTI when it is determined that the triggered BSRs contain a set type of BSR;
an SR triggering module 75, which is used for triggering an SR when no allocated UL-SCH resource is available in the subsequent TTI;
a determining module 91, which is used for determining whether the UE has available UL-SCH resource allocated for the new transmission in the current TTI after the SR is triggered, and obtaining the determining result;
an SR cancelling module 92, which is used for cancelling all SRs waiting for being processed when the determining result of the determining module is yes;
a channel determining module 93, which is used for determining that uplink control channel resource that can be used for sending SRs has been allocated to the UE and there is the uplink control channel resource that can be used for sending an SR in the current TTI when the determining result of the determining module is no;
an SR sending module 94, which is used for determining that the maximum number of SR sending times is not reached and sending the SR on an uplink control channel when there is uplink control channel resource that can be used for sending an SR in the current TTI.

The foregoing descriptions are preferred embodiments of the present invention and are not intended to limit the protection scope of the present invention.

## Claims

1. A method for reporting a scheduling request, SR, a user equipment, UE, triggering (601) an SR, the method comprising:
the UE determining (602, 603) whether uplink shared channel, UL-SCH, resource allocated for a new transmission is available in a current transmission time interval, TTI; if yes (603), all SRs waiting for being processed being cancelled;
if no (604), the SR being sent on an uplink control channel when it is determined that uplink control channel resource which can be used for sending an SR has been allocated to the UE, and that there is the uplink control channel resource which can be used for sending an SR in the current TTI and a maximum number of SR sending times is not reached.

2. The method according to claim 1, wherein before the UE triggers the SR, the method further comprising:
the UE triggering a buffer status report, BSR, when it is determined that no UL-SCH resource allocated for the new transmission is available in the current TTI, and that no UL-SCH resource scheduling grant is obtained and triggered BSRs contain a set type of BSR, an SR being triggered; or
when it is determined that no UL-SCH resource allocated for the new transmission is available in the current TTI, and that triggered BSRs contain a set type of BSR and no UL-SCH resource allocated for the new transmission is available in a subsequent TTI, an SR being triggered.

3. A device for reporting a scheduling request, SR, comprising:
a determining module (91), which is used for determining whether a user equipment, UE, has available uplink shared channel, UL-SCH, resource allocated for a new transmission in a current transmission time interval, TTI, and obtaining a determining result;
a channel determining module (93), which is used for determining that uplink control channel resource that can be used for sending an SR has been allocated to the UE and there is the uplink control channel resource that can be used for sending an SR in the current TTI when the determining result of the determining module is no;
an SR sending module (94), which is used for determining that a maximum number of SR sending times is not reached and sending an SR on an uplink control channel when there is the uplink control channel resource that can be used for sending an SR in the current TTI, and
an SR cancelling module (92), which is used for cancelling all SRs waiting for being processed when the determining result of the determining module is yes.

4. The device according to claim 3, wherein the device further comprising:
a BSR triggering module (71), which is used for triggering a buffer status report, BSR;
a resource determining module (72), which is used for determining that no UL-SCH resource allocated for the new transmission is available in the current TTI;
the device further comprising:
a grant determining module, which is used for determining that no UL-SCH resource scheduling grant is obtained when no UL-SCH resource allocated for the new transmission is available in the current TTI;
a BSR determining module (74), which is used for determining that BSRs contain a set type of BSR when it is determined that no UL-SCH resource scheduling grant is obtained;
an SR triggering module (75), which is used for triggering an SR when it is determined that the BSRs contain a set type of BSR;
or the device further comprising:
a BSR determining module, which is used for determining that BSRs contain a set type of BSR when no UL-SCH resource allocated for the new transmission is available in the current TTI;
a subsequent resource determining module, which is used for determining that no UL-SCH resource allocated for the new transmission is available in a subsequent TTI when it is determined that the BSRs contain a set type of BSR;
an SR triggering module, which is used for triggering an SR when no UL-SCH resource allocated for the new transmission is available in the subsequent TTI.

## Patentansprüche

1. Verfahren zur Meldung einer Zeitplanungsanfrage, SR, wobei eine Benutzereinrichtung, UE, die SR auslöst (601), das Verfahren umfassend:
Ermitteln (602, 603), durch die UE, ob eine für eine neue Übertragung zugewiesene geteilte Aufwärtsstreckenkanal-Ressource, UL-SCH-Ressource, in einem aktuellen Übertragungs-Zeitintervall, TTI, verfügbar ist;
wenn ja (603), Abbrechen aller auf eine Verarbeitung wartenden SR;
wenn nein (604), Senden der SR auf einem Aufwärtsstreckensteuerkanal, falls ermittelt wurde, dass eine Aufwärtsstreckensteuerkanal-Ressource, die zum Senden einer SR benutzt werden kann, der UE zugewiesen wurde und dass die Aufwärtsstreckensteuerkanal-Ressource, die zum Senden einer SR benutzt werden kann, in dem aktuellen TTI vorhanden ist und eine maximale Anzahl von SR-Sendevorgängen nicht erreicht ist.

2. Verfahren nach Anspruch 1, das Verfahren vor dem Auslösen der SR durch die UE ferner umfassend:
nach Auslösen, durch die UE, einer Pufferstatusmeldung, BSR, wenn ermittelt wurde, dass keine für die neue Übertragung zugewiesene UL-SCH-Ressource in dem aktuellen TTI verfügbar ist und dass keine UL-SCH-Ressourcen-Zeitplanungsbewilligung erhalten wurde und die ausgelösten BSR einen festgelegten Typ von BSR enthalten, Auslösen einer SR; oder
wenn ermittelt wurde, dass keine für die neue Übertragung zugewiesene UL-SCH-Ressource in dem aktuellen TTI verfügbar ist und dass die ausgelösten BSR einen festgelegten Typ von BSR enthalten und keine für die neue Übertragung zugewiesene UL-SCH-Ressource in einem folgenden TTI verfügbar ist, Auslösen einer SR.

3. Vorrichtung zur Meldung einer Zeitplanungsanfrage, SR, umfassend:
ein Ermittlungsmodul (91), das verwendet wird, um zu ermitteln, ob eine Benutzereinrichtung, UE, über eine für eine neue Übertragung zugewiesene geteilte Aufwärtsstreckenkanal-Ressource, UL-SCH-Ressource, in einem aktuellen Übertragungs-Zeitintervall, TTI, verfügt, und um ein Ermittlungsergebnis zu erhalten;
ein Kanalermittlungsmodul (93), das verwendet wird, um zu ermitteln, dass eine Aufwärtsstreckensteuerkanal-Ressource, die zum Senden einer SR benutzt werden kann, der UE zugewiesen wurde und dass die Aufwärtsstreckensteuerkanal-Ressource, die zum Senden einer SR benutzt werden kann, in dem aktuellen TTI vorhanden ist, wenn das Ermittlungsergebnis des Ermittlungsmoduls nein ist;
ein SR-Sendemodul (94), das verwendet wird, um zu ermitteln, dass eine maximale Anzahl von SR-Sendevorgängen nicht erreicht ist, und um eine SR auf einem Aufwärtsstreckensteuerkanal zu senden, wenn die Aufwärtsstreckensteuerkanal-Ressource, die zum Senden einer SR benutzt werden kann, in dem aktuellen TTI vorhanden ist, und
ein SR-Abbruchmodul (92), das verwendet wird, um alle auf eine Verarbeitung wartenden SR abzubrechen, wenn das Ermittlungsergebnis des Ermittlungsmoduls ja ist.

4. Vorrichtung nach Anspruch 3, wobei die Vorrichtung ferner umfasst:
ein BSR-Auslösemodul (71), das verwendet wird, um eine Pufferstatusmeldung, BSR, auszulösen;
ein Ressourcenermittlungsmodul (72), das verwendet wird, um zu ermitteln, dass keine für die neue Übertragung zugewiesene UL-SCH-Ressource in dem aktuellen TTI verfügbar ist;
die Vorrichtung ferner umfassend:
ein Bewilligungsermittlungsmodul, das verwendet wird, um zu ermitteln, dass keine UL-SCH-Ressourcen-Zeitplanungsbewilligung erhalten wurde, wenn keine für die neue Übertragung zugewiesene UL-SCH-Ressource in dem aktuellen TTI verfügbar ist;
ein BSR-Ermittlungsmodul (74), das verwendet wird, um zu ermitteln, dass die BSR einen festgelegten Typ von BSR enthalten, wenn ermittelt wurde, dass keine UL-SCH-Ressourcen-Zeitplanungsbewilligung erhalten wurde;
ein SR-Auslösemodul (75), das verwendet wird, um eine SR auszulösen, wenn ermittelt wurde, dass die BSR einen festgelegten Typ von BSR enthalten;
oder die Vorrichtung ferner umfassend:
ein BSR-Ermittlungsmodul, das verwendet wird, um zu ermitteln, dass die BSR einen festgelegten Typ von BSR enthalten, wenn keine für die neue Übertragung zugewiesene UL-SCH-Ressource in dem aktuellen TTI verfügbar ist;
ein Folge-Ressource-Ermittlungsmodul, das verwendet wird, um zu ermitteln, dass keine für die neue Übertragung zugewiesene UL-SCH-Ressource in einem folgenden TTI verfügbar ist, wenn ermittelt wurde, das die BSR einen festgelegten Typ von BSR enthalten;
ein SR-Auslösemodul, das verwendet wird, um eine SR auszulösen, wenn keine für die neue Übertragung zugewiesene UL-SCH-Ressource in dem folgenden TTI verfügbar ist.

## Revendications

1. Procédé de signalement d'une requête de planification, SR, dans lequel un équipement d'utilisateur, UE, déclenche (601) une requête SR, le procédé comprenant les étapes ci-dessous dans lesquelles :
l'équipement UE détermine (602, 603) si une ressource de canal partagé de liaison montante, UL-SCH, affectée pour une nouvelle transmission, est disponible dans un intervalle de temps de transmission, TTI, en cours ;
dans l'affirmative (603), toutes les requêtes SR en attente d'être traitées sont annulées ;
dans la négative (604), la requête SR est envoyée sur un canal de commande de liaison montante lorsqu'il est déterminé qu'une ressource de canal de commande de liaison montante qui peut être utilisée en vue d'envoyer une requête SR a été affectée à l'équipement UE, et qu'il existe la ressource de canal de commande de liaison montante qui peut être utilisée en vue d'envoyer une requête SR dans l'intervalle TTI en cours et qu'un nombre maximum de temps d'envoi de requêtes SR n'est pas atteint.

2. Procédé selon la revendication 1, dans lequel, avant que l'équipement UE ne déclenche la requête RS, le procédé comprend en outre l'étape ci-dessous dans laquelle :
l'équipement UE déclenche un rapport d'état de mémoire tampon, BSR, lorsqu'il est déterminé qu'aucune ressource de canal UL-SCH affectée pour la nouvelle transmission n'est disponible dans l'intervalle TTI en cours et qu'aucun octroi de planification de ressource de canal UL-SCH n'est obtenu, et que des rapports BSR déclenchés contiennent un type défini de rapport BSR, une requête SR est déclenchée ; ou
lorsqu'il est déterminé qu'aucune ressource de canal UL-SCH affectée pour la nouvelle transmission n'est disponible dans l'intervalle TTI en cours, et que des rapports BSR déclenchés contiennent un type défini de rapport BSR et qu'aucune ressource de canal UL-SCH affectée pour la nouvelle transmission n'est disponible dans un intervalle TTI subséquent, une requête SR est déclenchée.

3. Dispositif destiné à signaler une requête de planification, SR, comprenant :
un module de détermination (91), qui est utilisé en vue de déterminer si un équipement d'utilisateur, UE, présente une ressource de canal partagé de liaison montante, UL-SCH, disponible affectée pour une nouvelle transmission dans un intervalle de temps de transmission, TTI, en cours, et en vue d'obtenir un résultat de détermination ;
un module de détermination de canal (93), qui est utilisé en vue de déterminer qu'une ressource de canal de commande de liaison montante, qui peut être utilisée en vue d'envoyer une requête SR, a été affectée à l'équipement UE, et qu'il existe la ressource de canal de commande de liaison montante qui peut être utilisée en vue d'envoyer une requête SR dans l'intervalle TTI en cours, lorsque le résultat de détermination du module de détermination est négatif ;
un module d'envoi de requêtes SR (94), qui est utilisé en vue de déterminer qu'un nombre maximum de temps d'envoi de requêtes SR n'est pas atteint et en vue d'envoyer une requête SR sur un canal de commande de liaison montante lorsqu'existe la ressource de canal de commande de liaison montante qui peut être utilisée en vue d'envoyer une requête SR dans l'intervalle TTI en cours ; et
un module d'annulation de requêtes SR (92), qui est utilisé en vue d' annuler toutes les requêtes SR en attente de traitement lorsque le résultat de détermination du module de détermination est affirmatif.

4. Dispositif selon la revendication 3, dans lequel le dispositif comprend en outre :
un module de déclenchement de rapport BSR (71), qui est utilisé en vue de déclencher un rapport d'état de mémoire tampon, BSR ;
un module de détermination de ressources (72), qui est utilisé en vue de déterminer qu'aucune ressource de canal UL-SCH affectée à la nouvelle transmission n'est disponible dans l'intervalle TTI en cours ;
le dispositif comprenant en outre :
un module de détermination d'octrois, qui est utilisé en vue de déterminer qu'aucun octroi de planification de ressource de canal UL-SCH n'est obtenu lorsqu'aucune ressource de canal UL-SCH affectée pour la nouvelle transmission n'est disponible dans l'intervalle TTI en cours ;
un module de détermination de rapports BSR (74), qui est utilisé en vue de déterminer que des rapports BSR contiennent un type défini de rapport BSR lorsqu'il est déterminé qu'aucun octroi de planification de ressource de canal UL-SCH n'est obtenu ;
un module de déclenchement de requête SR (75), qui est utilisé en vue de déclencher une requête SR lorsqu'il est déterminé que les rapports BSR contiennent un type défini de rapport BSR ;
ou dans lequel le dispositif comprend en outre :
un module de détermination de rapports BSR, qui est utilisé en vue de déterminer que des rapports BSR contiennent un type défini de rapport BSR lorsqu'aucune ressource de canal UL-SCH affectée à la nouvelle transmission n'est disponible dans l'intervalle TTI en cours ;
un module de détermination de ressources subséquentes, qui est utilisé en vue de déterminer qu'aucune ressource de canal UL-SCH affectée à la nouvelle transmission n'est disponible dans un intervalle TTI subséquent lorsqu'il est déterminé que les rapports BSR contiennent un type défini de rapport BSR ;
un module de déclenchement de requête SR, qui est utilisé en vue de déclencher une requête SR lorsqu'aucune ressource de canal UL-SCH affectée à la nouvelle transmission n'est disponible dans l'intervalle TTI subséquent.
